# EUROPÄISCHE PATENTSCHRIFT

(11) **EP 1 208 745 B1**
(45) Veröffentlichungstag und Bekanntmachung des Hinweises auf die Patenterteilung: **26.05.2004**
(21) Anmeldenummer: 01122805.3
(22) Anmeldetag: 22.09.2001
(51) Int. Cl.: A01K 1/02

(54) **Abferkelstall-Vorrichtung**
Farrowing station
Station de mise bas

(30) Priorität: 16.11.2000 DE 10056851
(43) Veröffentlichungstag der Anmeldung: 29.05.2002
(73) Patentinhaber: Liebhart, Elmar, 89854 Dettingen (DE)
(72) Erfinder: Liebhart, Elmar, 89854 Dettingen (DE)
(74) Vertreter: Kiessling, Christian

(56) Entgegenhaltungen:
- BE-A- 1 002 816
- GB-A- 1 282 731
- US-A- 4 269 146

## Beschreibung

Die Erfindung betrifft eine Stall-Vorrichtung für Säue und Ferkel, mit mindestens einem mit einem Eingang und einem Ausgang versehenen Kastenstand zum Unterbringen jeweils einer Sau und einer Mehrzahl von Ferkeln, mit einem Säugebereich, der so dimensioniert ist, dass eine Sau ihre Ferkel liegend säugen kann, wobei im Bereich des Eingangs des Kastenstandes eine Brückeneinrichtung mit einem Gangweg vorgesehen ist, über den eine Sau in den Säugebereich gehen kann, wobei die Brückeneinrichtung so dimensioniert ist, dass unter dem Gangweg ein geschützter Raumbereich für die Mehrzahl von Ferkel geschaffen ist.

Stall-Vorrichtungen der eingangs genannten Art werden im Stand der Technik verwendet, um einer Sau ein ungestörtes Säugen (im Fachjargon: Abferkeln) ihrer Ferkel unter vor Witterung geschützten Bedingungen zu ermöglichen.

Aus GB-A-1, 282, 731 ist eine Stall-Vorrichtung der eingangs genannten Art bekannt. Wie die übrigen bekannten Stall-Vorrichtungen so weist jedoch auch diese den Nachteil auf, dass sie aufgrund ihrer großen Abmessungen viel Platz benötigt.

Aufgabe der Erfindung ist es deshalb, die Stall-Vorrichtung der eingangs genannten Art so weiterzubilden, dass ihre Abmessungen verkleinert sind, ohne dabei die Anforderungen an eine artgerechte Haltung zu verletzen.

Für eine Stall-Vorrichtung der eingangs genannten Art wird diese Aufgabe dadurch gelöst, dass der Säugebereich durch eine Begrenzungseinrichtung von dem Gangweg getrennt ist, der Gangweg von Begrenzugseinrichtungen so dimensioniert ist, dass eine Sau sich darin nicht um ihre Hochachse wenden kann, und zwei Klappeneinrichtungen vorgesehen sind, wobei jeweils eine Klappeneinrichtung an einem Ende der Begrenzungseinrichtung angeordnet ist.

Bevorzugte Ausgestaltungen der Erfindung sind Gegenstand der Unteransprüche.

Bei der Erfindungsgemäßen Stall-Vorrichtung wird durch die Merkmalskombination des Anspruchs 1 erreicht, dass es einer Sau ermöglicht ist, bei einem gegenüber den bekannten Stall-Vorrichtungen verkleinerten Gesamtinnenraum eines Kastenstandes in den Säugebereich eines Kastenstandes zu gelangen, ohne Gefahr zu laufen, unbeabsichtigt eines oder mehr ihrer Ferkel zu verletzen, wobei ein ungewolltes Wenden und Zurücklaufen einer Sau verhindert ist. Aufgrund des gegenüber den bekannten Stall-Vorrichtungen verkleinerten Gesamtinnenraum eines Kastenstandes ist ein erfindungsgemäßer Kastenstand darüber hinaus mit geringeren Kosten und damit effizienter beheizbar als die Kastenstände der bekannten Stall-Vorrichtungen.

Bei der erfindungsgemäßen Stall-Vorrichtung ist sichergestellt, dass der Eingangsbereich und der Säugebereich in unterschiedliche räumliche Ebenen getrennt sind, so dass zum einen eine optimale räumliche Nutzung eines Kastenstandes und damit die Möglichkeit zu einer weiteren verkleinerten Dimensionierung gegeben ist, wobei zum anderen sichergestellt ist, dass eine Sau ihre eigenen Ferkel nicht unbeabsichtigt durch Treten verletzt oder sogar tötet. Das unbeabsichtigte Verletzen oder Töten der eigenen Ferkel durch Treten seitens einer Sau ist eine Gegebenheit, die bei der Tierhaltung in der Tat ein großes Problem darstellt, da Säue nur ein streng nach vorne gerichtetes Gesichtsfeld haben und somit nicht sehen und wahrnehmen, worauf sie treten.

Gemäß einer ersten bevorzugten Ausführungsform der erfindungsgemäßen Stall-Vorrichtung ist vorgesehen, dass die Klappeneinrichtungen verschließbar sind. Dadurch ist zum einen sichergestellt, dass eine Sau in dem Kastenstand fixierbar ist, und zum anderen, dass eine ihre Ferkel säugende Sau nicht durch andere Säue gestört werden kann.

Die Klappeneinrichtungen sind dabei vorzugsweise um eine horizontal gelagerte Achse schwenkbar, weil ein freies Zurückschwingen einer Klappeinrichtung so am sichersten gewährleistet ist.

Gemäß einer weiteren bevorzugten Ausführungsform der erfindungsgemäßen Stall-Vorrichtung ist vorgesehen, dass die Brückeneinrichtung und der Raumbereich so dimensioniert sind, dass die Ferkel den Raumbereich zum Säugen nicht verlassen müssen.

Des weiteren ist bei der erfindungsgemäßen Stall-Vorrichtung ist vorzugsweise vorgesehen, dass die Brückeneinrichtung mit mindestens einem seitlichen Führungsgeländer versehen ist.

Der Kastenstand der erfindungsgemäßen Stall-Vorrichtung ist vorzugsweise überdacht, um für die Sau und die Ferkel auch im Winter ein artgerechtes temperaturkontrolliertes Mikroklima ohne Zugluft zu schaffen. Der Ausgang des Kastenstandes kann dabei eine Öffnung enthalten, durch die eine Sau ihren Kopf hindurch ins Freie stecken kann. Diese Öffnung ist vorzugsweise verschließbar, um auch im Winter die artgerechte Temperaturbedingungen zu schaffen.

Bei der erfindungsgemäßen Stall-Vorrichtung ist weiterhin vorzugsweise vorgesehen, dass eine Mehrzahl parallel ausgerichteter Kastenständen zu einer Stall-Einheit zusammengefügt ist. Eine solche Bauweise mindert die Wärmeverluste aus einem Kastenstand und trägt damit zu einem ökonomischen Betrieb bei.

Die erfindungsgemäße Vorrichtung wird im folgenden anhand einer bevorzugten Ausführungsform erläutert, die in den Figuren der Zeichnung dargestellt ist. Darin zeigen:
- Fig.1: eine Stall-Vorrichtung gemäß dem Stand der Technik in einer Ansicht von oben;
- Fig.2: eine bevorzugte Ausführungsform der erfindungsgemäßen Stall-Vorrichtung in einer Ansicht von oben;
- Fig.3: die in Figur 2 dargestellte bevorzugte Ausführungsform der erfindungsgemäßen Stall-Vorrichtung in einer geschnittenen Seitenansicht entlang der Linie A-A der Figur 2.

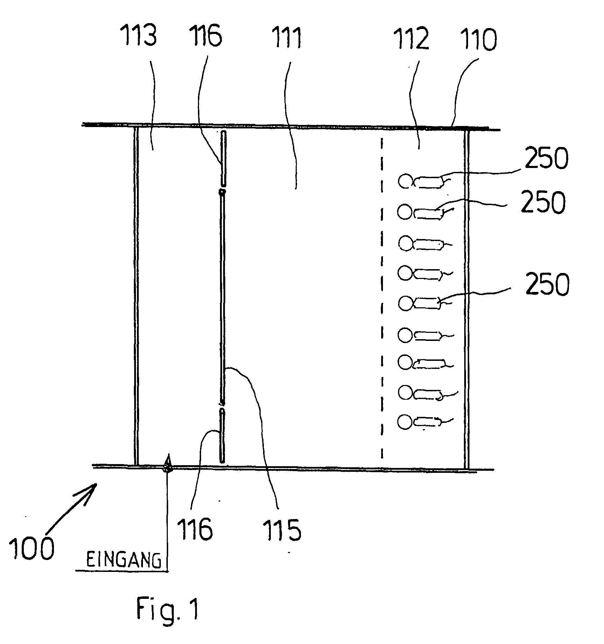

Die in der Figur 1 dargestellte Stall-Vorrichtung 100 für Säue und Ferkel weist einen mit einem Eingang und einem Ausgang versehenen Kastenstand 110 zum Unterbringen jeweils einer Sau und einer Mehrzahl von Ferkeln auf. In dem Kastenstand 110 ist ein Säugebereich 111 vorgesehen, der so dimensioniert ist, dass eine Sau ihre Ferkel dort liegend säugen kann. Des weiteren weist der Kastenstand 110 einen Ferkelbereich 112 auf, in dem sich die Ferkel befinden. Der Säugebereich 111 ist durch eine Begrenzungseinrichtung 115 von einem Gangweg 113 getrennt, durch den eine Sau der Richtung der Pfeile folgend in den Säugebereich 111 gelangen kann. Die Begrenzungseinrichtung 115 weist zwei verschließbare Klappeneinrichtungen 116 auf, die um eine horizontal gelagerte Achse schwenkbar sind.

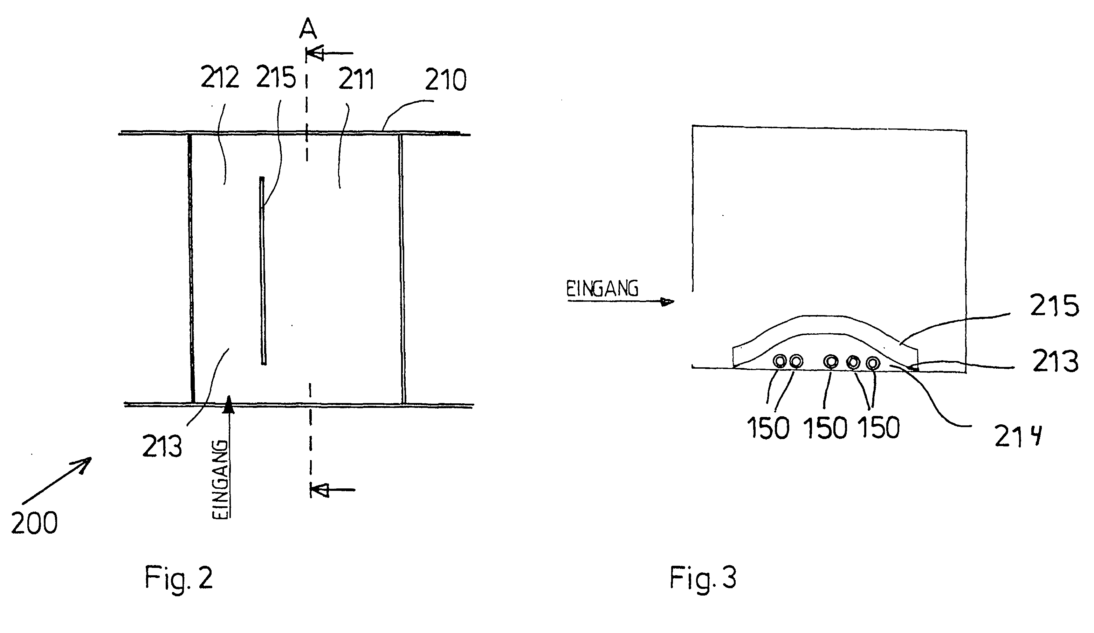

Die in den Figuren 2 und 3 dargestellte erfindungsgemäße Stall-Vorrichtung 200 für Säue und Ferkel weist einen mit einem Eingang und einem Ausgang versehenen Kastenstand 210 zum Unterbringen jeweils einer Sau und einer Mehrzahl von Ferkeln auf. In dem Kastenstand 210 ist ein Säugebereich 211 vorgesehen, der so dimensioniert ist, dass eine Sau ihre Ferkel dort liegend säugen kann. Im Bereich des Eingangs des Kastenstandes 210 ist eine Brückeneinrichtung 212 mit einem Gangweg 213 vorgesehen ist, über den eine Sau in den Säugebereich 211 gehen kann, wobei die Brückeneinrichtung 212 so dimensioniert ist, dass unter dem Gangweg 213 ein geschützter Raumbereich 214 für die Mehrzahl von Ferkel geschaffen ist.

Die Brückeneinrichtung und der Raumbereich sind bei der erfindungsgemäßen Stall-Vorrichtung 200 so dimensioniert, dass die Ferkel den Raumbereich 214 zum Säugen nicht verlassen müssen. Die Brückeneinrichtung mit einem seitlichen Führungsgeländer 215 versehen, das an der Seite des Gangweges angebracht ist, die zu dem Raumbereich 214 hinweist. Die andere Seite des Gangweges ist von einer Seitenwand 216 des Kastenstandes 210 gesichert.

Es versteht sich, das die erfindungsgemäße Stall-Vorrichtung entgegen den in den Figuren 2 und 3. dargestellten Ausführungsformen auch jeweils spiegelbildlich ausgebildet sein kann. Dies kann bei einer Aneinanderreihung einer Mehrzahl von Stall-Vorrichtungen nebeneinander vorteilhaft sein, um den Eingang jeweils zweier Stallvorrichtungen zusammenzulegen.

Das oben erläuterte Ausführungsbeispiel der Erfindung dient lediglich dem Zweck eines besseren Verständnisses der durch die Ansprüche definierten erfindungsgemäßen Lehre, die als solche durch das Ausführungsbeispiel nicht eingeschränkt ist.

## Patentansprüche

1. Stall-Vorrichtung für Säue und Ferkel, mit mindestens einem mit einem Eingang und einem Ausgang versehenen Kastenstand (210) zum Unterbringen jeweils einer Sau und einer Mehrzahl von Ferkeln (150), mit einem Säugebereich (211), der so dimensioniert ist, dass eine Sau ihre Ferkel (150) liegend säugen kann, wobei im Bereich des Eingangs des Kastenstandes (210) eine Brückeneinrichtung (212) mit einem Gangweg (213) vorgesehen ist, über den eine Sau in den Säugebereich (211) gehen kann, wobei die Brückeneinrichtung (212) so dimensioniert ist, dass unter dem Gangweg (213) ein geschützter Raumbereich (214) für die Mehrzahl von Ferkel (150) geschaffen ist, **dadurch gekennzeichnet, dass** der Säugebereich (211) durch eine Begrenzungseinrichtung (215) von dem Gangweg (213) getrennt ist, der Gangweg von Begrenzugseinrichtungen so dimensioniert ist, dass eine Sau sich darin nicht um ihre Hochachse wenden kann, und zwei Klappeneinrichtungen vorgesehen sind, wobei jeweils eine Klappeneinrichtung an einem Ende der Begrenzungseinrichtung (215) angeordnet ist.

2. Vorrichtung nach Anspruch 1, **dadurch gekennzeichnet, dass** die Klappeneinrichtungen verschließbar sind.

3. Vorrichtung nach einem der Ansprüche 1 oder 2, **dadurch gekennzeichnet, dass** die Klappeneinrichtungen um eine horizontal gelagerte Achse schwenkbar sind.

4. Vorrichtung nach einem der vorhergehenden Ansprüche, **dadurch gekennzeichnet, dass** die Brückeneinrichtung und der Raumbereich so dimensioniert sind, dass die Ferkel den Raumbereich zum Säugen nicht verlassen müssen.

5. Vorrichtung nach einem der vorhergehenden Ansprüche, **dadurch gekennzeichnet, dass** die Brückeneinrichtung mit mindestens einem seitlichen Führungsgeländer als Begrenzungseinrichtung versehen ist.

6. Vorrichtung nach einem der vorhergehenden Ansprüche, **dadurch gekennzeichnet, dass** der Kastenstand überdacht ist.

7. Vorrichtung nach einem der vorhergehenden Ansprüche, **dadurch gekennzeichnet, dass** der Ausgang des Kastenstandes eine Öffnung enthält, durch die eine Sau ihren Kopf hindurch ins Freie stecken kann.

8. Vorrichtung nach Anspruch 7, **dadurch gekennzeichnet, dass** die Öffnung verschließbar ist.

9. Vorrichtung nach einem der vorhergehenden Ansprüche, **dadurch gekennzeichnet, dass** eine Mehrzahl von Kastenständen zu einer Stall-Einheit zusammengefügt ist.

## Claims

1. A pen for sows and piglets, comprising at least one box (210) provided with an entrance and an exit and adapted to accommodate one sow and a plurality of piglets (150), including a suckling area (211), which is dimensioned such that a sow can suckle her piglets (150) in a lying position, and in the vicinity of the entrance to the box (210) there is provided a bridging contrivance (212) having a gangway (213) through which the sow can go into the suckling area (211), said bridging contrivance (212) being dimensioned such that a protected space (214) for the plurality of piglet (150) is formed beneath the gangway (213), **characterized in that** the suckling area (211) is separated from the gangway (213) by restraining means (215), which gangway is dimensioned by restraining means (215) such that a sow cannot turn about its vertical axis, and two flaps are provided, one at each end of said restraining means (215).

2. A pen as defined in claim 1, **characterized in that** said flaps are capable of being closed.

3. A pen as defined in claim 1 or claim 2, **characterized in that** said flaps are adapted to revolve on a horizontally mounted axle.

4. A pen as defined in any one of the previous claims, **characterized in that** said bridging contrivance and the living area are dimensioned such that the piglets need not leave said area in order to be suckled.

5. A pen as defined in any one of the previous claims, **characterized in that** said bridging contrivance is provided with at least one lateral guide railing as restraining means.

6. A pen as defined in any one of the previous claims, **characterized in that** the box is covered over.

7. A pen as defined in any one of the previous claims, **characterized in that** the exit of the box contains an opening through which the sow can stick her head out.

8. A pen as defined in claim 7, **characterized in that** said opening is closable.

9. A pen as defined in any one of the previous claims, **characterized in that** a plurality of boxes is integrated to form a unit pen.

## Revendications

1. Installation d'étable pour truies et cochonnets, présentant au moins une stalle (210) munie d'une entrée et d'une sortie, servant à abriter une truie respective et une pluralité de cochonnets (150), contenant une zone d'allaitement (211) dimensionnée pour permettre à la truie d'allaiter ses cochonnets (150) en position couchée, un dispositif de pont (212) étant prévu dans la zone d'entrée de la stalle (210), conprenant une passerelle (213) par laquelle une truie peut passer dans la zone d'allaitement (211), le dispositif de pont (212) étant dimensionné de façon à créer, au-dessous de la passerelle (213), une zone de stalle (214) protégée pour la pluralité de cochonnets (150),
**caractérisée en ce que** la zone d'allaitement (211) est séparée de la passerelle (213) par un dispositif limiteur (215), **en ce que** la passerelle est dimensionnée, par les dispositifs limiteurs (215), de façon à assurer qu'une truie ne puisse pas se tourner autour de son axe normal, et **en ce que** deux portes sont prévues, une porte respective étant disposée à chaque extrémité du dispositif limiteur (215).

2. Installation selon la revendication 1,
**caractérisée en ce que** les portes peuvent être fermées à serrure.

3. Installation selon l'une des revendications 1 ou 2,
**caractérisée en ce que** les portes basculent autour d'un axe horizontal.

4. Installation selon l'une quelconque des revendications préalables,
**caractérisée en ce que** le dispositif de pont (212) et la zone de stalle (214) sont dimensionnés de façon que les cochonnets n'ont pas besoin de quitter la zone de stalle (214) pour l'allaitement.

5. Installation selon l'une quelconque des revendications préalables,
**caractérisée en ce que** le dispositif de pont (212) est muni d'au moins une balustrade de guidage latérale (215) en tant que dispositif limiteur.

6. Installation selon l'une quelconque des revendications préalables,
**caractérisée en ce que** la stalle est couverte.

7. Installation selon l'une quelconque des revendications préalables,
**caractérisée en ce que** la sortie de la stalle présente une ouverture, par laquelle une truie peut pencher sa tête à l'extérieur.

8. Installation selon la revendication 7,
**caractérisée en ce que** ladite ouverture peut être fermée à serrure.

9. Installation selon l'une quelconque des revendications préalables,
**caractérisée en ce que** une pluralité de stalles est assemblée pour obtenir une unité d'étable.
